# EUROPÄISCHE PATENTANMELDUNG

(11) **EP 1 329 851 A2**
(43) Veröffentlichungstag der Anmeldung: **23.07.2003**
(21) Anmeldenummer: 02102825.3
(22) Anmeldetag: 19.12.2002
(51) Int. Cl.: G06T 11/00

(54) **Verfahren zur Darstellung von unterschiedlichen Bildern eines Untersuchungsobjektes**

(30) Priorität: 22.12.2001 DE 10163813
(71) Anmelder: Philips Intellectual Property & Standards GmbH, 20099 Hamburg (DE); Koninklijke Philips Electronics N.V., 5621 BA Eindhoven (NL)
(72) Erfinder: Rösch, Peter, Dr., Postfach 50 04 42, 52088 Aachen (DE); Borgert, Jörn, Dr., Postfach 50 04 42, 52088 Aachen (DE)
(74) Vertreter: Volmer, Georg, Dipl.-Ing.

(57) **Zusammenfassung**

Die Erfindung betrifft ein Verfahren zur Darstellung von unterschiedlichen Bildern eines Untersuchungsobjekts, insbesondere von medizinischen Bildern eines Patienten, mit den Schritten:
- Anzeigen zumindest eines ersten Bildes und eines zweiten Bildes,
- Bestimmen einer elastischen Transformation, die Bildelementen des ersten Bildes jeweils Bildelemente des zweiten Bildes zuordnet,
- Definieren eines Objekts, das dem ersten Bild überlagert und zusammen mit dem ersten Bild dargestellt wird,
- Bestimmen eines dem Objekt in dem ersten Bild korrespondierenden Objekts in dem zweiten Bild mittels der elastischen Transformation,
- Überlagern des zweiten Bildes mit dem korrespondierenden Objekt, und
- Darstellen des korrespondierenden Objekts zusammen mit dem zweiten Bild.

## Beschreibung

Die vorliegende Erfindung betrifft ein Verfahren und eine Vorrichtung zur Darstellung von unterschiedlichen Bildern eines Untersuchungsobjekts sowie ein Computerprogramm zur Umsetzung des Verfahrens.

In der medizinischen Diagnostik ist es häufig notwendig, anhand von unterschiedlichen Bildern desselben Untersuchungsobjekts Veränderungen an dem Untersuchungsobjekt zu erkennen. Mittels Computertomografie oder Magnetresonanztomografie zu unterschiedlichen Zeiten aufgenommene Bilder sind jedoch in der Regel aus unterschiedlichen Positionen und Blickrichtungen aufgenommen. Ferner führen natürliche Patientenbewegungen dazu, dass sich die Lage und Form der Organe in den unterschiedlichen Bildern voneinander unterscheiden. Das Beugen von Gliedern oder die Atembewegung stellen unstarre Bewegungen dar, das heißt, das anatomische Untersuchungsobjekt kann nicht durch starre Transformationen wie Rotation und Translation in seine Ursprungslage versetzt werden.

Es wird vielfach gewünscht, dass der Arzt anhand der zu unterschiedlichen Zeitpunkten aufgenommenen Bilder erkennen kann, welche Veränderungen an dem dargestellten Untersuchungsobjekts aufgrund natürlicher Bewegungen und Deformationen entstanden sind und welche Veränderungen auf pathologische Veränderungen wie beispielsweise Tumorwachstum zurückzuführen sind. Aufnahmen eines Patienten, die vor und nach einer Operation bzw. Behandlung gemacht wurden, werden routinemäßig miteinander verglichen, um den Erfolg der Behandlung zu beurteilen.

Dem Arzt kommt dabei die schwierige Aufgabe zu, Unterschiede zwischen den Bildern, die auf natürliche Patientenbewegungen zurückzuführen sind, von pathologischen Veränderungen oder Veränderungen aufgrund einer Operation zu unterscheiden. Er wird dabei Herkömmlicherweise durch Abbildungsverfahren unterstützt, die die miteinander zu vergleichenden Bilder aufeinander abbilden. Zum Einsatz kommen dabei elastische Transformationen, da Deformationen des Untersuchungsobjekts häufig keine starren Bewegungen darstellen. Eine Vielzahl von Verfahren zur Bestimmung der die elastische Transformationen spezifizierenden Parameter sind hierzu bekannt, beispielsweise aus P. Rösch, T. Netsch, M. Quist, G. P. Penney, D. L. G. Hill, and J. Weese "Robust 3 D deformation field estimation by template propagation", Volume 1935, pages 521 - 530, MICCAI, Springer, 2000.

Geeignete Interpolationsverfahren, wie beispielsweise in M. Fornefett, K. Rohr, and S. Stiehl, "Radial base functions with compact support for elastic registration of medical images", Image and Vision Computing, 19: 87 - 96, 2001 beschrieben, werden eingesetzt, um aus den ermittelten Parametern dichte Transformationsfelder zu erhalten. Die somit erhaltene Abbildung bzw. das Deformationsfeld wird auf eines der Bilder angewandt, um das Ergebnis der Transformation zu berechnen. Das transformierte Bild und das entsprechende ursprüngliche Bild können nebeneinander angezeigt werden, oder die Unterschiede zwischen den Bildern werden mittels Subtraktions- oder Überlagerungsverfahren dargestellt.

Die Anwendung elastischer Transformationen hat jedoch gewisse Nachteile. Zum einen führt der Einsatz von Interpolationsverfahren dazu, dass das transformierte Bild verschwommene bzw. unscharfe Ränder aufweist. Zum anderen führen Ungenauigkeiten der ermittelten elastischen Transformation zu Artefakten. Diese Artefakte führen zu signifikanten Änderungen der Form der abgebildeten anatomischen Strukturen.

Am schwerwiegendsten ist jedoch das folgende Problem: Die eingesetzten Verfahren zur Ermittlung einer elastischen Transformation unterscheiden nicht zwischen pathologischen Veränderungen (beispielsweise durch Tumorwachstum) und natürlichen Deformationen des Untersuchungsobjekts (beispielsweise durch Patientenbewegung). Deshalb neigen alle herkömmlich eingesetzten Algorithmen dazu, sowohl pathologische als auch nicht pathologische Veränderungen des abgebildeten Untersuchungsobjekts zu korrigieren. D. h. die Unterschiede zwischen dem ursprünglichen Bild und dem transformierten Bild lassen Rückschlüsse auf die pathologischen Veränderungen oder operativ bedingten Veränderungen nicht zu. Das transformierte Bild ist für die Erstellung einer Diagnose ungeeignet, weshalb Radiologen darauf bestehen, die ursprünglichen Bilder betrachten und interpretieren zu können. Dies hat dazu geführt, dass sich der Einsatz von elastischen Transformationen zur Visualisierung von Bildveränderungen in der klinischen Praxis bislang nicht durchgesetzt hat.

Es ist Aufgabe der vorliegenden Erfindung, ein Verfahren zur Darstellung von unterschiedlichen Bildern eines Untersuchungsobjekts bereitzustellen, welches die vorstehenden Nachteile überwindet und insbesondere die Anwendung von elastischen Transformationen zur klinischen Diagnostik ermöglicht.

Diese Aufgabe wird erfindungsgemäß durch ein Verfahren zur Darstellung von unterschiedlichen Bildern eines Untersuchungsobjekts gelöst, welches die folgenden Schritte aufweist:
- Anzeigen zumindest eines ersten Bildes und eines zweiten Bildes von Untersuchungsobjekten,
- Bestimmen einer elastischen Transformation, die Bildelementen des ersten Bildes jeweils Bildelemente des zweiten Bildes zuordnet,
- Definieren eines Objekts, das dem ersten Bild überlagert und zusammen mit dem ersten Bild dargestellt wird,
- Bestimmen eines dem Objekt in dem ersten Bild korrespondierenden Objekts in dem zweiten Bild mittels der elastischen Transformation,
- Überlagern des zweiten Bildes mit dem korrespondierenden Objekt, und
- Darstellen des korrespondierenden Objekts zusammen mit dem zweiten Bild.

Erfindungsgemäß werden die ursprünglich aufgenommenen Bilder unverändert angezeigt. Ein Betrachter kann also weiterhin die Unterschiede in der abgebildeten Anatomie selbstständig beurteilen. Er wird dabei jedoch durch das erfindungsgemäße Verfahren unterstützt. Der Betrachter wählt dazu ein ihn interessierendes Bildelement, z.B. einen Tumor oder ein anatomisches Element in dem ersten Bild aus, indem er ein Objekt definiert, das dem ersten Bild überlagert wird. Als Objekt kommen insbesondere Oberflächen, Umrandungen oder Linien, aber auch einzelne Punkte, sogenannte "landmarks", in Frage. Das Objekt wird dem Betrachter in dem ersten Bild angezeigt.

Beispielsweise erhält das Objekt einen einheitlichen Farbton, der das Objekt von dem ersten Bild deutlich abhebt.

Mittels der elastischen Transformation wird das entsprechende Objekt in dem zweiten Bildes bestimmt. Die elastische Transformation stellt eine Abbildungsvorschrift dar, die den Bildelementen des ersten Bildes jeweils Bildelemente des zweiten Bildes zuordnet. Die Bildinhalte, insbesondere die Farbtöne, Grauwerte und Helligkeitsstufen des ersten Bildes werden von der elastischen Transformation nicht verändert. Allein dem Ort eines Bildpunktes in dem ersten Bild ordnet die elastische Transformation einen korrespondierenden Ort in dem zweiten Bild zu. Anhand des Teilbereichs des ersten Bildes, der von dem definierten Objekt überlagert wird, wird mittels der elastischen Transformation das korrespondierende Objekt in dem zweiten Bild bestimmt. Das ursprüngliche zweite Bild wird also weiterhin - bis auf das korrespondierende Objekt - unverändert angezeigt. Der Betrachter kann selbstständig abschätzen, ob sich die in den Bildern gezeigte Anatomie geändert hat. Das Ergebnis der elastischen Transformation, das in dem zweiten Bild angezeigt wird, dient somit als Hilfe zur Beurteilung der angezeigten Bilder.

Bevorzugt werden jeweils drei erste und zweite Bilder angezeigt, wobei die ersten und zweiten Bilder jeweils drei unterschiedliche, vorzugsweise zueinander orthogonale Schnittflächen eines Untersuchungsobjekts darstellen. Die ersten Bilder geben beispielsweise den Zustand eines Untersuchungsobjekts zu einem anderen Zeitpunkt wieder als die zweiten Bilder. Sie können aber auch Abbildungen unterschiedlicher Untersuchungsobjekte darstellen. Die ersten und zweiten Bilder erlauben dem Betrachter, sich die dreidimensionale Gestalt des abgebildeten Untersuchungsobjekts vorzustellen. Vorzugsweise wird ein in einem der drei ersten Bilder definiertes Objekt jeweils in den übrigen ersten Bildern angezeigt. Es kann also letztlich ein dreidimensionales Objekt, das z. B. einem interessierenden Teil des anatomischen Untersuchungsobjekts entspricht, definiert werden. Die elastische Transformation ordnet den Bildelementen der ersten drei Bilder jeweils Bildelemente der zweiten drei Bilder zu. Das erfindungsgemäße Verfahren ist bevorzugt so ausgestaltet, dass bei einer Änderung des Objekts in einem der ersten Bilder alle Darstellungen des Objekts in allen anderen ersten und zweiten Bildern unmittelbar und automatisch geändert werden.

Häufig stellen die ersten und zweiten Bilder das Untersuchungsobjekt aus unterschiedlichen Orientierungen dar. Der Betrachter kann bei dem Vergleich der angezeigten Bilder dadurch unterstützt werden, dass Ihm das dargestellte Untersuchungsobjekt in den ersten und zweiten Bildern aus entsprechenden Orientierungen dargestellt wird. Dazu wählt der Betrachter beispielsweise in den ersten Bildern mehrere Punkte bzw. landmarks aus. Daraufhin wird eine Fläche berechnet, in der alle landmarks liegen. Wenn die landmarks nicht in einer Fläche liegen, so wird ein Fläche berechnet, deren euklidscher Abstand zu den landmarks minimal ist. Vorzugsweise werden ebene Flächen berechnet. Es können allerdings auch gekrümmte Flächen mit dem geringsten Abstand zu den landmarks berechnet werden. Daraufhin wird unter Verwendung der elastischen Transformation die entsprechende Fläche für die zweiten Bilder errechnet. Die berechneten Flächen in dem ersten und zweiten Bild stellen jeweils die zu verwendende Betrachtungsebene dar, in der die aufgenommenen Untersuchungsobjekte dargestellt werden. Aus den aufgenommenen Bilddaten wird errechnet, wie sich das Untersuchungsobjekt in den berechneten Flächen darstellt und dem Betrachter angezeigt.

Vorzugsweise stellt das ausgewählte Objekt in dem ersten Bild einen Rand eines dreidimensionalen Gegenstandes dar. Als Rand kann z. B. die Darstellung einer Tumoroberfläche in dem ersten Bild definiert werden. Das korrespondierende Objekt des zweiten Bildes stellt dann den von der elastischen Transformation berechneten Rand des Tumors zum Zeitpunkt der Aufnahme des zweiten Bildes dar, sofern sich der Tumor zwischenzeitlich nicht verändert hat. Da die berechnete Oberfläche dem ursprünglichen zweiten Bild überlagert angezeigt wird, kann der Radiologe sofort beurteilen, ob sich der Tumor verändert hat oder nicht. Sofern sich der Tumor nämlich verändert hat, stimmt bei einer bevorzugten Ausgestaltung der dem zweiten Bild überlagerte (berechnete) Rand nicht mit dem tatsächlichen Rand des Tumors in dem zweiten Bild überein Die Diagnose wird ihm nicht abgenommen, er wird jedoch bei der Diagnose unterstützt.

Es kann auch vorgesehen sein, dass das Objekt durch die elastische Transformation ebenfalls in seiner Größe und Lage verändert wird, sofern der Bildinhalt, dem das Objekt überlagert ist, zwischen dem ersten und zweiten Bild unterschiedlich hinsichtlich Größe und Lage ist, wenn also beispielsweise ein von dem Objekt umrandeter Tumor zwischenzeitlich geschrumpft oder gewachsen ist. Das Objekt wird insbesondere dann derartig verändert werden, wenn bei der Bestimmung der elastischen Transformationsvorschrift Veränderungen des überlagerten Bildinhalts mit berücksichtigt wurden. Wenn also ein umrandeter Tumor in den ersten Bildern dargestellt ist und der Tumor seine Größe verändert hat bis zur Erstellung der zweiten Bilder, wird bei dieser Ausgestaltung wieder der Rand des Tumors in den zweiten Bildern korrekt durch das korrespondierende Objekt markiert sein, was für den Arzt unmittelbar einen Vergleich des Tumors in den Bildern möglich macht.

Das Objekt in dem ersten Bild bzw. in den ersten Bildern kann vorzugsweise manuell ausgewählt werden. Die Auswahl des Objekts kann durch ein Verfahren der modellbasierten Segmentierung erfolgen. Dabei kommen deformierbare Modellbereiche zur Anwendung. Der deformierbare Modellbereich kann dazu beispielsweise an einer geeigneten Position in dem ersten Bild platziert werden und daraufhin deformiert werden. Das korrespondierende Objekt, das in dem zweiten Bild angezeigt wird, gibt aufgrund von Ungenauigkeiten und Artefakten der elastischen Transformation nicht immer die Veränderung des in dem ersten Bild definierten Objekts korrekt wieder. Deshalb ist es bevorzugt möglich, das korrespondierende Objekt in dem zweiten Bild manuell zu korrigieren; es kann jedoch auch eine automatische oder halbautomatische Korrektur vorgesehen sein.

Das erste Bild stellt vorzugsweise eine Abbildung eines standardisierten Modells eines Untersuchungsobjekts und das zweite Bild eine Abbildung des Untersuchungsobjekts dar. Dieses Verfahren ist insbesondere für den Einsatz in der Werkstoffprüfung geeignet. Beispielsweise kann das Modell eines korrekt gefertigten Bauteils als erstes Bild abgebildet werden. Das zu prüfende Bauteil stellt das zweite Bild dar. Unterschiede zwischen dem korrespondierenden Objekts in dem zweiten Bild und dem Objekt in dem ersten Bild machen dann Abweichungen des zu prüfenden Bauteils von dem korrekt gefertigten Bauteil sichtbar.

Erfindungsgemäß wird eine Vorrichtung zur Darstellung von unterschiedlichen Bildern eines Untersuchungsobjekts bereitgestellt. Die erfindungsgemäße Vorrichtung umfasst ein Anzeigemittel, Mittel zur Definition von Objekten und eine Recheneinheit. Das Anzeigemittel ist dazu vorgesehen, die ersten und zweiten Bilder des Untersuchungsobjekts simultan anzuzeigen. Die Definitionsmittel sollen es dem Radiologen bzw. Betrachter ermöglichen, Objekte in dem ersten Bild zu definieren. Das ausgewählte Objekt wird daraufhin von dem Anzeigemittel in dem ersten Bild angezeigt. Die Recheneinheit ist dazu vorgesehen, die elastische Transformation zu bestimmen, welche den Bildelementen des ersten Bildes jeweils Bildelemente des zweiten Bildes zuordnet. Sie berechnet ferner aus dem ausgewählten Objekt das korrespondierende Objekt, das letztlich von dem Anzeigemittel in dem zweiten Bild dargestellt wird.

Ein bevorzugtes Ausführungsbeispiel der vorliegenden Erfindung wird anhand der beigefügten Figuren nachfolgend erläutert. Es zeigen:
- Figuren 1a, 1b und 1c: drei erste orthogonale Schnittbilder eines Kopfes,
- Figuren 2a, 2b und 2c: drei zweite orthogonale Schnittbilder desselben Kopfes, und
- Figur 3: eine erfindungsgemäße Vorrichtung zur simultanen Darstellung der in den Figuren 1 und 2 gezeigten Bilder.

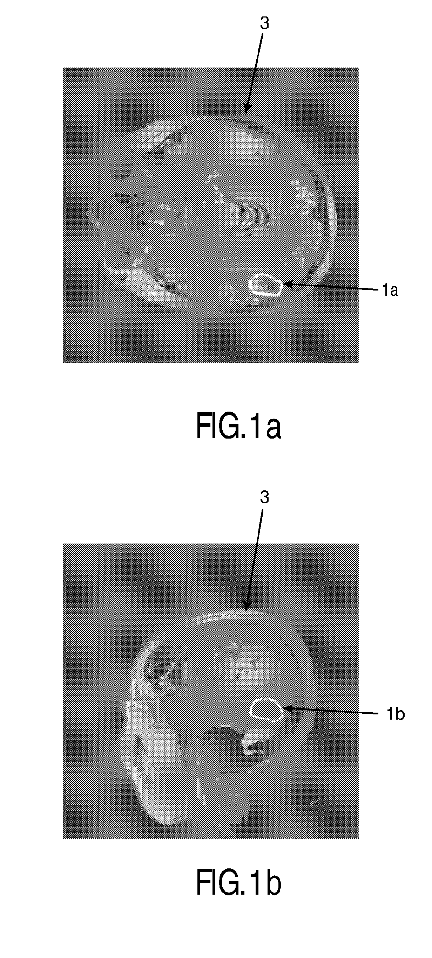

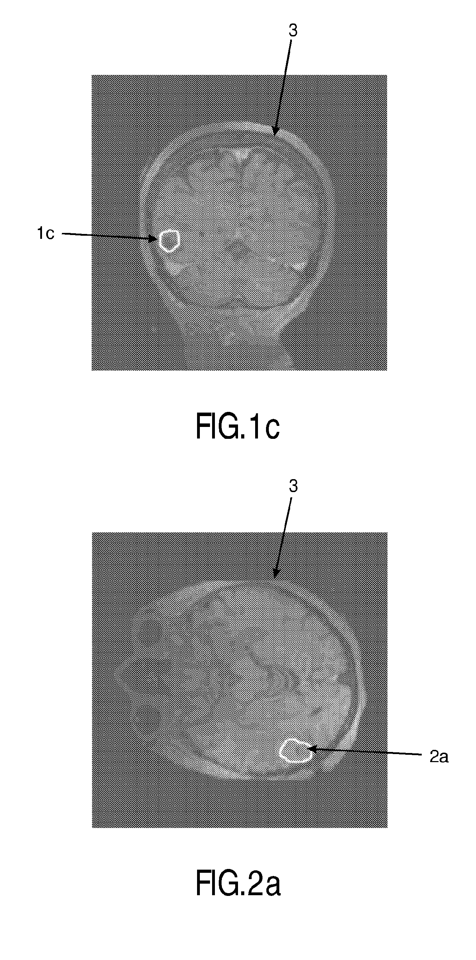

Die in den Figuren 1a -1c und 2a - 2c dargestellten Schnittbilder eines Kopfes 3 eines Patienten werden dem Radiologen gleichzeitig angezeigt. Sie stellen ein Magnetresonanzbild eines Patienten dar, der unter einer Tumorerkrankung leidet. Die in den Figuren 2a - 2c aufgenommenen Bilder wurden nach Gewinnung und Untersuchung einer Gewebeprobe des Tumors aufgenommen. Um die zwischenzeitliche Veränderung des Tumorgewebes beurteilen zu können, muss der Radiologe das Tumorgewebe in den unterschiedlichen Aufnahmen identifizieren können. Dabei wird er von dem erfindungsgemäßen Verfahren unterstützt.

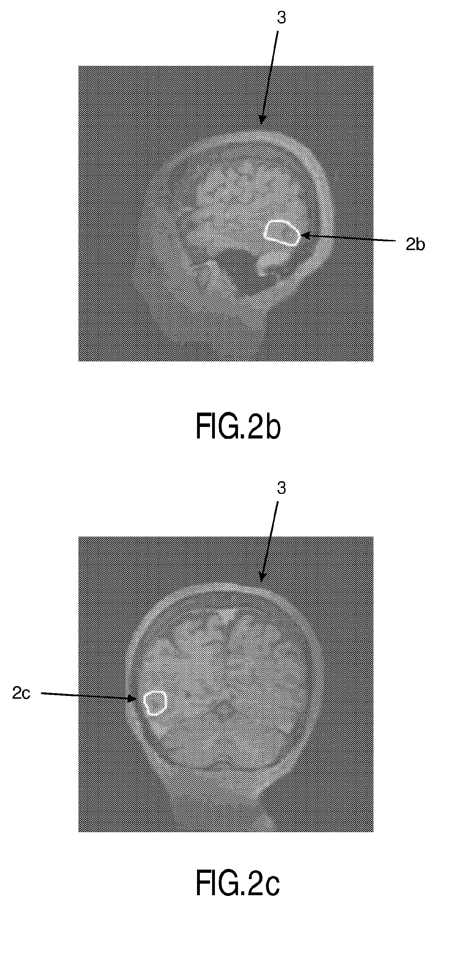

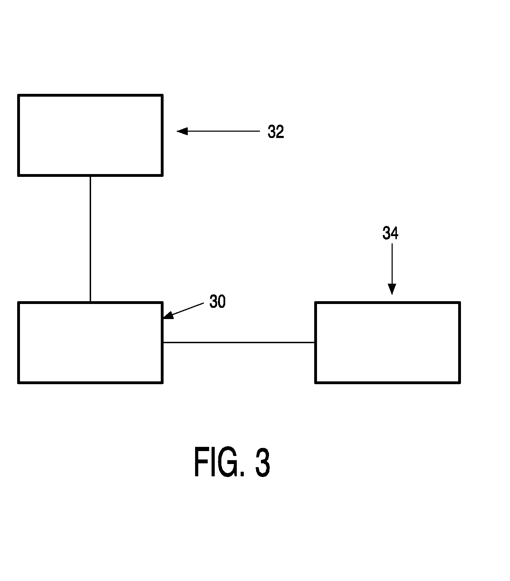

Bei der in Figur 3 gezeigten Vorrichtung ist eine Recheneinheit 30 mit einem Anzeigemittel 32 z. B. einem Bildschirm, verbunden, welcher die in den Figuren 1 und 2 dargestellten Bilder anzeigt. Die Recheneinheit 30 berechnet eine elastische Transformation, welche in den Figuren 1a, 1b und 1c dargestellten Bilder auf die in den Figuren 2a, 2b und 2c dargestellten Bilder abbildet. Den in den Figuren 1a, 1b und 1c dargestellten Bildpunkten bzw. Bildelementen werden jeweils entsprechende Bildelemente in den Figuren 2a, 2b und 2c zugeordnet. Die Berechnung der elastischen Transformationen erfolgt mittels bekannter Verfahren. Abhängig davon, welches der bekannten Verfahren zur Berechnung der elastischen Transformation eingesetzt wird, muss gegebenenfalls ein Interpolationsverfahren, beispielsweise unter Verwendung radialer Basisfunktionen, eingesetzt werden, um ein dichtes Transformationsfeld zu erhalten. Die Transformation kann auch durch Parameter kontinuierlicher Funktionen, beispielsweise Polynome, repräsentiert werden. Die berechneten Parameter oder das Deformationsfeld werden von der Recheneinheit 30 für spätere Anwendungen abgespeichert.

Der Anwender wählt mittels einer Auswahleinrichtung 34 einen interessierenden Teilbereich des Untersuchungsobjekts aus, z.B. einen Tumor, und definiert ein Objekt, z.B. den Rand oder die Oberfläche des Teilbereichs. Das definierte Objekt wird dann von den Anzeigemitteln 32 in den ersten Bildern (Figuren 1a, 1b und 1c) angezeigt. Bezugszeichen 1a, 1b und 1c kennzeichnen jeweils das von einem Anwender definierte Objekt. Der in den Figuren 1a, 1b und 1c jeweils dargestellte Teilbereich entspricht vorliegend der Oberfläche eines dreidimensionalen Gegenstandes, beispielsweise eines Tumors. In jeder der orthogonalen Schnittebenen wird somit der Rand dieses Gegenstandes dem Anwender als definiertes Objekt dem Bild überlagert angezeigt. Die Auswahl und Definition des Objekts kann durch deformierbare Modelle oder aktive Konturen vereinfacht werden. Unmittelbar anschließend an die Definition eines Objekts in den ersten Bildern 1a, 1b und 1c werden mittels der Recheneinheit 30 die entsprechenden Objekte (Figuren 2a, 2b und 2c) berechnet und dem zweiten Bild überlagert angezeigt. Die zuvor berechnete elastische Transformation wird auf das definierte Objekt 1a, 1b, 1c der ersten Bilder angewendet, und die Berechnungsergebnisse werden in den zweiten Bildern (Figuren 2a, 2b und 2c) dargestellt. Bezugszeichen 2a, 2b und 2c zeigen das zu den Objektdarstellungen 1a, 1b, 1c korrespondierende berechnete Objekt. Die Berechnungen werden bevorzugt in Echtzeit durchgeführt, so dass ein Anwender bei Veränderung des Objekts in den ersten Bildern sofort die entsprechenden Veränderungen des korrespondierenden Objekts in den zweiten Bildern angezeigt bekommt.

Sofern sich der ausgebildete Teilbereich, also der Tumor, in der Zwischenzeit zwischen der Erstellung der ersten und zweiten Bilder nicht verändert hat, wird das definierte Objekt in den ersten und zweiten Bildern jeweils dieselbe Lage und Orientierung bezüglich des Teilbereichs aufweisen. Wenn als Objekt beispielsweise der Rand des Tumors definiert wurde, wird in den ersten und zweiten Bildern jeweils korrekt der Rand des Tumors markiert sein. Wenn sich jedoch in der Zwischenzeit der Tumor verändert hat, beispielsweise aufgrund einer Tumorbehandlung verkleinert oder aufgrund krankhaften Wachstums vergrößert hat, wird der in den zweiten Bildern angezeigte Rand nicht mehr mit dem tatsächlichen Rand des Tumors übereinstimmen, was dem Betrachter unmittelbar anzeigt, dass sich der Tumor verändert hat.

Eine andere Möglichkeit besteht darin, dass die elastische Transformationsvorschrift auch Veränderungen des Tumors in der Vorschrift selbst mit berücksichtigt, so dass bei Anwendung der elastischen Transformation auf den in den ersten Bildern definierten Rand des Tumors der Rand in den zweiten Bilden ebenfalls, genauso wie der Tumor, seine Größe verändert. Bei Überlagerung des berechneten Randes in den zweiten Bildern wird somit wieder korrekt der Rand des Tumors als Markierung angezeigt.

Durch die erfindungsgemäße Darstellung mindestens eines ersten und mindestens eines zweiten Bildes eines Untersuchungsobjekts, ohne dass die Bildinhalte des ersten und zweiten Bildes selbst elastisch transformiert werden, werden ein Bildvergleich und eine Beobachtung eventueller Veränderungen des gezeigten Untersuchungsobjekts deutlich vereinfacht, ohne dass durch ungewollte Transformationen Fehler eingeführt werden. Artefakte, die auf Ungenauigkeiten des verwendeten Registrierungsverfahrens oder durch Interpolation des Bildinhalts herrühren, werden dadurch vermieden. Die elastische Transformation wird erfindungsgemäß im Voraus berechnet, was eine Darstellung der Bilder bzw. veränderter Bilder in Echtzeit ermöglicht und somit eine interaktive Beeinflussung der Darstellung durch den Betrachter erlaubt, beispielsweise eine Betrachtung eines Tumorwachstums in einer Zeitserie zahlreicher Bilder. Registrierungsfehler erscheinen bei dem erfindungsgemäßen Verfahren als Fehler zwischen der in den Bildern enthaltenden morphologischen Information und den von dem Benutzer definierten Objekte. Dadurch können Fehler leicht detektiert und interaktiv korrigiert werden. Die Klassifikation von Veränderungen der Pathologie werden somit unterstützt, die Entscheidung selbst ist jedoch dem Experten überlassen. Das erfindungsgemäße Verfahren wird somit eine größere klinische Akzeptanz verglichen mit bekannten Vorgehensweisen erreichen.

## Patentansprüche

1. Verfahren zur Darstellung von unterschiedlichen Bildern eines Untersuchungsobjekts, insbesondere von medizinischen Bildern eines Patienten, mit den Schritten:
- Anzeigen zumindest eines ersten Bildes und eines zweiten Bildes,
- Bestimmen einer elastischen Transformation, die Bildelementen des ersten Bildes jeweils Bildelemente des zweiten Bildes zuordnet,
- Definieren eines Objekts, das dem ersten Bild überlagert und zusammen mit dem ersten Bild dargestellt wird,
- Bestimmen eines dem Objekt in dem ersten Bild korrespondierenden Objekts in dem zweiten Bild mittels der elastischen Transformation,
- Überlagern des zweiten Bildes mit dem korrespondierenden Objekt, und
- Darstellen des korrespondierenden Objekts zusammen mit dem zweiten Bild.

2. Verfahren nach Anspruch 1,
**dadurch gekennzeichnet,**
**dass** jeweils drei erste und zweite Bilder angezeigt werden, wobei die drei ersten und zweiten Bilder jeweils drei unterschiedliche, insbesondere orthogonale, Schnittflächen des Untersuchungsobjekts darstellen.

3. Verfahren nach Anspruch 2,
**dadurch gekennzeichnet,**
**dass** ein in einem der ersten Bilder definiertes Objekt jeweils in den anderen ersten Bildern angezeigt wird.

4. Verfahren nach Anspruch 1,
**dadurch gekennzeichnet,**
**dass** das dem ersten Bild überlagerte Objekt einen Rand eines dreidimensionalen Gegenstandes darstellt.

5. Verfahren nach Anspruch 1,
**dadurch gekennzeichnet,**
**dass** das Objekt in dem ersten Bild manuell, automatisch oder halbautomatisch, definiert wird.

6. Verfahren nach Anspruch 1,
**dadurch gekennzeichnet,**
**dass** das Objekt in dem ersten Bild durch Verfahren der modellbasierten Segmentierung definiert wird.

7. Verfahren nach Anspruch 1,
**dadurch gekennzeichnet,**
**dass** das korrespondierende Objekt in dem zweiten Bild manuell, automatisch oder halbautomatisch korrigiert wird.

8. Verfahren nach Anspruch 1,
**dadurch gekennzeichnet,**
**dass** das erste Bild und zweite Bild jeweils Abbildungen desselben Untersuchungsobjekts darstellen.

9. Verfahren nach Anspruch 1,
**dadurch gekennzeichnet,**
**dass** das erste Bild eine Abbildung eines standardisierten Modells eines Untersuchungsobjekts darstellt und das zweite Bild eine Abbildung des Untersuchungsobjekts darstellt.

10. Vorrichtung zur Darstellung von unterschiedlichen Bildern eines Untersuchungsobjekts, insbesondere von medizinischen Bildern eines Patienten, mit einem Anzeigemittel (32) zum Anzeigen eines ersten Bildes und eines zweiten Bildes, einer Recheneinheit (30) zum Bestimmen einer elastischen Transformation, die Bildelementen des ersten Bildes jeweils Bildelemente des zweiten Bildes zuordnet, und Mitteln (34) zum Definieren eines Objekts, das dem ersten Bild zu überlagert und zusammen mit dem ersten Bild dargestellt wird,
**dadurch gekennzeichnet,**
**dass** die Recheneinheit (30) ausgebildet ist, ein dem Objekt in dem ersten Bild korrespondierendes Objekt in dem zweiten Bild mittels der elastischen Transformation zu bestimmen, und
**dass** das Anzeigemittel (32) ausgebildet ist, das korrespondierende Objekt dem zweiten Bild zu überlagern und das korrespondierende Objekt zusammen mit dem zweiten Bild darzustellen.

11. Computerprogramm mit Computerprogrammmitteln zur Veranlassung eines Computers, die Schritte des Verfahrens gemäß Anspruch 1 auszuführen, wenn das Computerprogramm auf einem Computer läuft.
